Europäisches Patentamt

European Patent Office

Office européen des brevets

(19)

(11) **EP 1 168 739 B1**

(12) **FASCICULE DE BREVET EUROPEEN**

(45) Date de publication et mention
de la délivrance du brevet:
**19.10.2005 Bulletin 2005/42**

(51) Int Cl.⁷: **H04L 25/02**

(21) Numéro de dépôt: **00113060.8**

(22) Date de dépôt: **23.06.2000**

(54) **Procédé et dispositif d'estimation de la réponse impulsionelle d'un canal de transmission d'informations, en particulier pour un téléphone mobile cellulaire**

Verfahren und Vorrichtung zur Schätzung der Impulsantwort eines Übertragungskanals, insbesondere für ein zellulares Mobiltelefon

Method and apparatus for estimating the impulse response of a transmission channel, in particular for a cellular mobile telephone

(84) Etats contractants désignés:
**DE FR GB IT**

(43) Date de publication de la demande:
**02.01.2002 Bulletin 2002/01**

(73) Titulaire: **STMicroelectronics N.V.**
**1077 XX Amsterdam (NL)**

(72) Inventeur: **Chappaz, David**
**1202 Genève (CH)**

(74) Mandataire: **Casalonga, Axel**
**BUREAU D.A. CASALONGA - JOSSE**
**Paul-Heyse-Strasse 33**
**80336 München (DE)**

(56) Documents cités:
**WO-A-97/44916**         **WO-A-98/40977**
**US-A- 5 889 827**

**Description**

L'invention concerne la transmission d'informations numériques, notamment mais non exclusivement dans le domaine du téléphone mobile cellulaire tel que celui prévu dans le système GSM.

L'invention concerne plus particulièrement l'estimation de la réponse impulsionnelle d'un canal de transmission véhiculant des informations depuis un émetteur jusqu'à un récepteur, via un moyen de propagation. Ce moyen de propagation peut être l'air dans le cas des téléphones mobiles cellulaires, ou bien tout autre moyen de propagation tel qu'un câble, par exemple, dans d'autres applications.

Un facteur fondamental de limitation des performances d'un système de communication numérique est le phénomène bien connu de l'homme du métier, dénommé "interférence inter-symboles".

Une telle interférence inter-symboles provoque au niveau du récepteur une occupation temporelle de chaque symbole transmis ("bit", par exemple), supérieure à la durée initiale dudit symbole (encore appelée "temps bit", par exemple).

En d'autres termes, le signal reçu à un instant donné ne dépend pas d'un seul symbole ("bit", par exemple), mais également des autres symboles (bits) émis qui s'étendent sur des durées supérieures à celles d'un temps symbole (temps bit).

En pratique, le signal reçu à un instant donné dépend du symbole considéré, mais également essentiellement des symboles adjacents.

Les causes des interférences inter-symboles sont multiples.

L'une d'entre elles est due notamment aux propagations multiples du signal entre l'émetteur et le récepteur lorsque le signal est réfléchi ou diffracté par différents obstacles, conduisant à la réception à plusieurs copies du signal, mutuellement décalées temporairement.

Par ailleurs, non seulement le moyen de propagation entre l'émetteur et le récepteur engendre ces interférences entre symboles, mais également les dispositifs d'émission-réception eux-mêmes (modulateur, filtre, ...).

Lors des communications avec interférence entre symboles, se pose le problème d'estimer la réponse impulsionnelle du canal de transmission. De la qualité de cette estimation, dépend la capacité que l'on a à supprimer l'interférence entre symboles, et donc à prendre les décisions correctes sur les symboles émis.

Généralement, l'estimation de la réponse impulsionnelle du canal, ou plus simplement "estimation de canal", s'effectue, dans le domaine du téléphone GSM notamment, en utilisant des techniques de moindres carrés et en utilisant une séquence de symboles prédéterminée et connue de l'émetteur et du récepteur, et dénommée par l'homme du métier sous le vocable de "séquence d'apprentissage" ("training sequence"). Cette séquence d'apprentissage est présente au sein de chaque train ("burst") de symboles émis. Lorsque les caractéristiques du canal sont suffisamment bien estimées, on utilise les coefficients estimés de la réponse impulsionnelle du canal dans un traitement dit "d'égalisation", également bien connu de l'homme du métier, pour déchiffrer le signal reçu, c'est-à-dire retrouver les valeurs logiques des symboles (données) émis dans le train.

Le traitement d'égalisation est classiquement suivi par les traitements dits "de décodage de canal" destinés à corriger autant que faire ce peu, d'éventuelles erreurs. Le décodage de canal est lui-même classiquement suivi d'un autre décodage, dit "décodage de source", destiné à reconstituer les informations (parole, par exemple) initialement codées au niveau de l'émetteur.

On connaît par l'article de Khayrallah et autres, intitulé "Improved Channel Estimation With Side Information" (1997, IEEE), et par le brevet américain correspondant n° 5838739, une méthode d'estimation de canal, basée sur l'utilisation combinée des séquences d'apprentissage et des caractéristiques connues des moyens d'émission et de réception (filtres), et consistant à déterminer en une seule fois les coefficients estimés de la réponse impulsionnelle du canal.

Or, une telle méthode présente des inconvénients.

L'un de ceux-ci réside dans le fait que cette méthode dépend des informations transmises, à savoir les séquences d'apprentissage, qui peuvent être différentes selon les systèmes utilisés. En conséquence, il est nécessaire de mémoriser dans le téléphone portable, par exemple, autant de matrices qu'il y a de séquences d'apprentissage différentes possibles. Un autre inconvénient réside dans le fait qu'une telle méthode n'est pas applicable à des estimations de canal dites "aveugles", c'est-à-dire lorsque des séquences d'apprentissage ne sont pas disponibles.

L'invention vise à apporter une solution à ces problèmes.

Un but de l'invention est de proposer une amélioration de l'estimation de canal qui puisse s'appliquer aussi bien à des estimations dites "entraînées" (c'est-à-dire avec séquences d'apprentissage) qu'à des estimations dites "aveugles" (c'est-à-dire sans séquence d'apprentissage.

L'invention a également pour but de proposer un telle amélioration, qui soit extrêmement simple à implémenter.

L'invention propose donc un procédé d'estimation de la réponse impulsionnelle d'un canal de transmission d'informations, le canal comportant un émetteur d'informations, un récepteur d'informations et un moyen de propagation, par exemple l'air, s'étendant entre l'émetteur et le récepteur.

Selon une caractéristique générale de l'invention, on effectue une première estimation de la réponse impulsionnelle du canal, considéré dans sa globalité, puis on corrige cette première estimation, indépendamment des informations transmises, en tenant compte du fait que la réponse impulsionnelle de l'émetteur et la réponse impulsionnelle du récepteur sont connues, de façon à obtenir une estimation finale corrigée de la réponse impulsionnelle du canal.

En d'autres termes, l'invention procède ici en deux temps. Tout d'abord, le canal est estimé dans sa globalité, canal qui associe l'émetteur, le récepteur et le moyen de propagation, mais en ne tenant pas compte du fait que la réponse impulsionnelle de l'émetteur et du récepteur sont connues. En d'autres termes, cette première estimation est effectuée de manière classique, par toute méthode connue, qu'elle soit entraînée ou aveugle.

Puis, dans un deuxième temps, cette première estimation est corrigée en se servant des éléments connus, à savoir les réponses impulsionnelles de l'émetteur et du récepteur.

Outre le fait que le procédé selon l'invention soit parfaitement compatible avec des estimations aveugles ou entraînées de canal, elle est, en ce qui concerne la phase de correction, totalement indépendante des données émises, puisqu'elle ne fait intervenir que les caractéristiques intrinsèques et connues des moyens d'émission et de réception, comme par exemple les modulateurs, démodulateurs et différents filtres.

Selon un mode de mise en oeuvre du procédé selon l'invention, on obtient les coefficients de l'estimation finale de la réponse impulsionnelle du canal en multipliant les coefficients de la première estimation de la réponse impulsionnelle du canal par une matrice dont les coefficients sont prédéterminés, représentatifs des réponses impulsionnelles de l'émetteur et du récepteur, et indépendants des informations transmises sur le canal.

Ainsi, l'invention est remarquable en ce sens qu'elle ne nécessite la mémorisation que d'une seule matrice de transformation, dont les coefficients sont notamment indépendants des données transmises et par conséquent indépendants des séquences d'apprentissage lorsqu'elles existent.

L'invention a également pour objet un dispositif d'estimation de la réponse impulsionnelle d'un canal de transmission d'informations, comportant un émetteur d'informations, un récepteur d'informations et un moyen de propagation s'étendant entre l'émetteur et le récepteur.

Selon une caractéristique générale de l'invention, le dispositif comprend des premiers moyens d'estimation aptes à effectuer une première estimation de la réponse impulsionnelle du canal, considéré dans sa globalité, et des deuxièmes moyens d'estimation, connectés aux premiers moyens d'estimation, et aptes à corriger cette première estimation, indépendamment des informations transmises, en tenant compte du fait que la réponse impulsionnelle de l'émetteur et la réponse impulsionnelle du récepteur sont connues, de façon à délivrer une estimation finale corrigée de la réponse impulsionnelle du canal.

Selon un mode de réalisation de l'invention, les deuxièmes moyens d'estimation comportent une mémoire contenant une matrice dont les coefficients sont prédéterminés, représentatifs des réponses impulsionnelles de l'émetteur et du récepteur, et indépendants des informations transmises sur le canal, et des moyens de traitement aptes à multiplier les coefficients de la première estimation de la réponse impulsionnelle du canal par ladite matrice, de façon à obtenir les coefficients de l'estimation finale de la réponse impulsionnelle du canal.

Les premiers moyens d'estimation peuvent effectuer une première estimation dite "aveugle", ou bien une première estimation dite "entraînée".

L'invention a également pour objet un téléphone mobile cellulaire, incorporant un dispositif d'estimation de la réponse impulsionnelle d'un canal de transmission d'informations, tel que défini ci-avant.

L'invention propose également un programme d'ordinateur, comprenant des moyens de code-programme mettant en oeuvre le procédé d'estimation tel que défini ci-avant lorsque ledit programme est exécuté au sein d'un processeur.

L'invention propose encore un support, par exemple une mémoire morte, capable d'être lue par un processeur, et contenant des moyens de code-programme aptes à mettre en oeuvre le procédé d'estimation tel que défini ci-avant lorsque ledit programme est exécuté au sein du processeur.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 illustre schématiquement les constituants essentiels d'un émetteur et d'un récepteur, aptes à mettre en oeuvre le procédé selon l'invention;
- la figure 2 illustre plus en détail, mais toujours schématiquement, une partie des moyens du récepteur de la figure 1;
- la figure 3 illustre schématiquement les principales composantes de la réponse impulsionnelle d'un canal de transmission; et
- la figure 4 est un organigramme très simplifié d'un mode de mise en oeuvre du procédé selon l'invention.

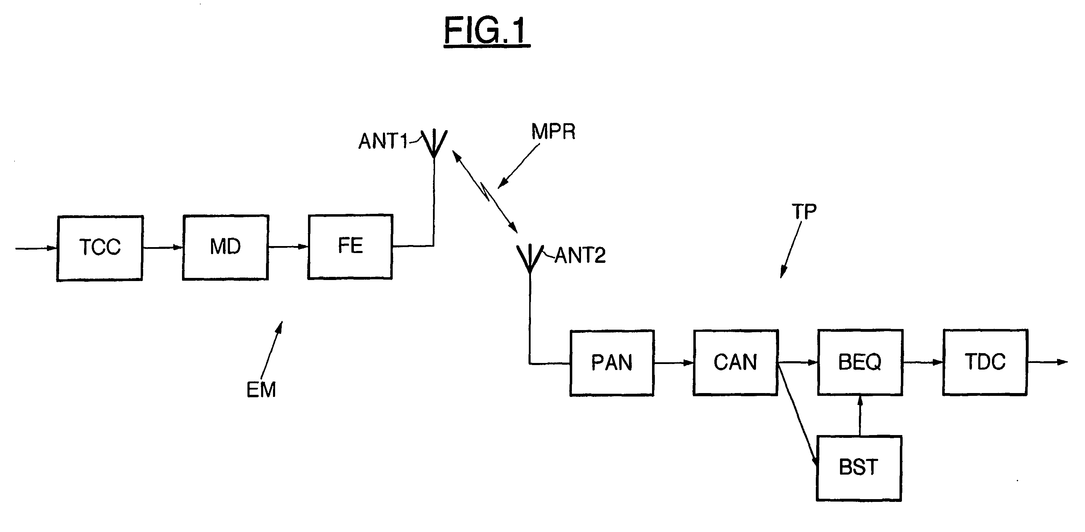

On suppose maintenant, en se référant plus particulièrement à la figure 1, que l'invention s'applique par exemple au domaine des téléphones mobiles cellulaires, par exemple ceux du réseau GSM.

Sur la figure 1, la référence EM désigne un émetteur comportant en amont un bloc de codage TCC, recevant les données utiles à transmettre, par exemple de la parole, et effectuant notamment des traitements classiques dits "de codage de canal" en introduisant des redondances dans le flot de données. La sortie du bloc TCC consiste en des blocs d'informations binaires.

Le bloc TCC est suivi classiquement d'un modulateur effectuant par exemple une modulation en quadrature du type QPSK ou 8PSK, selon une dénomination bien connue de l'homme du métier et transformant le signal binaire en un signal analogique. Ce signal analogique est ensuite filtré dans un filtre d'émission FE avant d'être émis en direction, du récepteur via une antenne ANT1.

Le moyen de propagation MPR entre un émetteur EM et un récepteur TP, constitué ici d'un téléphone mobile cellulaire, est dans le cas présent l'air.

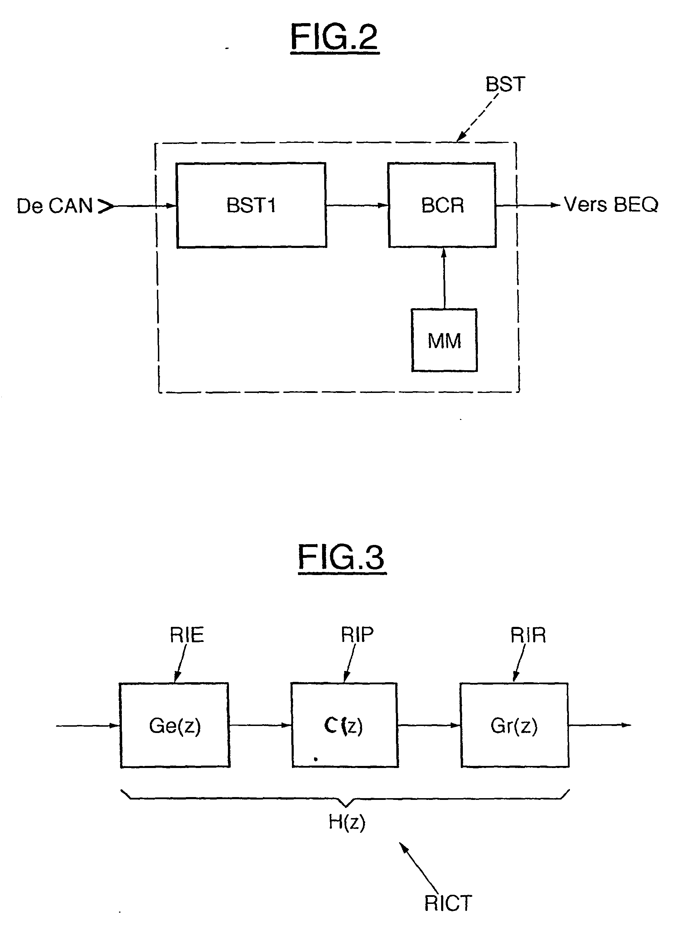

Le récepteur TP, ou téléphone mobile cellulaire, comporte essentiellement en tête une antenne ANT2 couplée à un étage analogique PAN réalisant essentiellement une conversion de fréquence pour ramener le signal modulé reçu en bande de base, et un filtrage pour ne conserver que la partie utile du spectre. Après échantillonnage et conversion analogique numérique dans un convertisseur CAN, l'étage numérique a pour rôle de produire une estimation du canal de transmission (bloc BST dont la structure plus détaillée sur la figure 2 sera décrite ci-après), de supprimer grâce à cette estimation l'interférence entre symboles (par une égalisation effectuée dans un bloc BEQ), et d'effectuer en général une correction d'erreur, c'est-à-dire un décodage classique de canal (bloc TDC) basé par exemple sur un décodeur de Viterbi, ...

Au sens de la présente invention, le canal de transmission est formé des éléments situés en amont de l'estimateur de canal, c'est-à-dire notamment des dispositifs analogiques d'émission et de réception ainsi que du moyen de propagation physique proprement dit MPR. Il convient de noter ici qu'il est également possible de trouver et de prendre en compte des traitements numériques (filtrage par exemple) effectués en amont de l'estimateur de canal mais en aval de l'étage de réception analogique.

Le modèle ou réponse impulsionnelle H(z) du canal de transmission à estimer est illustré schématiquement sur la figure 3. Cette réponse impulsionnelle de canal RICT est en fait le produit de la réponse impulsionnelle RIE de l'émetteur, de la réponse impulsionnelle RIP du moyen de propagation proprement dit, et de la réponse impulsionnelle RIR du récepteur.

Plus précisément, H(z) est défini par la formule (I) ci-dessous :

$$H(z) = G_e(z) \, C(z) \, G_r(z) \tag{I}$$

ou, plus simplement H(z) est égal à :

$$H(z) = G(z) \, C(z) \tag{II}$$

dans laquelle G(z) représente la réponse impulsionnelle des dispositifs d'émission et de réception, et C(z) la réponse impulsionnelle du moyen de propagation physique.

Dans le cas présent, G(z) et C(z) sont des polynomes en $z^{-1}$ dont le nombre de coefficients complexes est prédéterminé et dépend notamment des caractéristiques des dispositifs d'émission et de réception, mais également de l'environnement de propagation du signal (trajet collineux, urbain, ...). Le nombre de coefficients complexes est généralement basé sur un "pire cas". Ainsi, du point de vue propagation, le milieu montagneux est effectivement un pire cas par rapport au milieu urbain ou rural par exemple.

On suppose, à titre d'exemple, que la réponse impulsionnelle H du canal de transmission pris dans sa globalité est un polynome en $z^{-1}$ de degré 7 à huit coefficients complexes $h_0$-$h_7$, que l'on cherche à estimer. H(z) est donc défini par la formule (III) ci-dessous :

$$H(z) = h_0 + h_1 \, z^{-1} + \ldots\ldots + h_7 \, z^{-7} \tag{III}$$

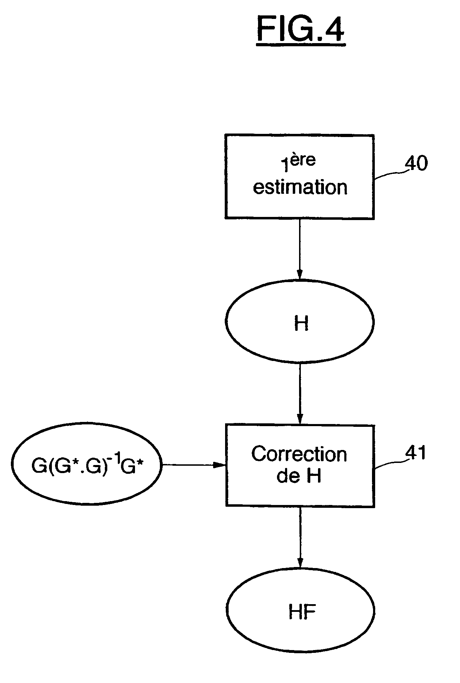

On effectue tout d'abord (figure 4) une première estimation 40 des coefficients $h_0$-$h_7$.

Cette première estimation est effectuée de façon classique. Plus précisément, si cette première estimation est une estimation dite "entraînée", c'est-à-dire utilisant des séquences d'apprentissage formées de succession de bits de valeur connue, chaque séquence de signal reçu R est définie par la formule matricielle (IV) ci-dessous :

$$R = S \cdot H + N \qquad\qquad (IV)$$

dans laquelle S désigne la matrice représentative de la séquence d'apprentissage, H représente le vecteur formé des coefficients $h_0$-$h_7$ et N un vecteur additionnel représentatif notamment des interférences et du bruit thermique.

Une façon classique de résoudre ce système, c'est-à-dire d'estimer les coefficients $h_i$ de la réponse impulsionnelle H du canal pris dans sa globalité, consiste à utiliser une méthode des moindres carrés qui vise à déterminer H comme étant le vecteur minimisant la norme (enclidienne) du vecteur N. L'homme du métier sait alors que le vecteur H est défini par la formule (V) ci-dessous :

$$H = (S{*}S)^{-1} S{*} R \qquad\qquad (V)$$

dans laquelle l'annotation "*" désigne la matrice transposée complexe conjuguée.

Bien entendu, d'autres méthodes sont également utilisables pour estimer les coefficients $h_i$ de la réponse impulsionnelle du canal pris dans sa globalité. Ces autres méthodes sont également bien connues de l'homme du métier et l'on ne reviendra pas plus en détail ici sur ces autres méthodes.

Il est également possible d'utiliser des estimations dites "aveugles", c'est-à-dire dans lesquelles on n'utilise pas de séquences d'apprentissage prédéterminées.

L'homme du métier connaît également diverses méthodes permettant d'effectuer des estimations aveugles de la réponse impulsionnelle H d'un canal pris dans sa globalité. A titre indicatif, on peut citer l'article de Jitendra K. Tugnait, intitulé "Blind Estimation Of Digital Communication Channel Impulse Response", IEEE Transactions On Communications, Vol. 42, N°2/3/4, February/March/April 1994.

L'estimation de canal est effectuée dans un bloc BST (figure 2). Plus précisément, la première estimation est effectuée dans un sous-bloc BST1 du bloc BST. Matériellement, l'ensemble du bloc BST peut être réalisé par exemple par un processeur de traitement du signal, les traitements effectués dans le bloc BST1 étant réalisés de façon logicielle. Ces traitements sont alors sous forme de codes-programme pouvant être aisément écrits par l'homme du métier à partir de la définition fonctionnelle de ces traitements. Les moyens de code-programme sont alors par exemple stockés dans une mémoire morte associée au processeur. Ceci étant, une réalisation entièrement matérielle (hardware) du bloc BST est également possible, par exemple sous forme d'un circuit intégré spécifique (ASIC).

Une fois cette première estimation obtenue, on va la corriger dans un bloc BCR fonctionnellement également réalisé de façon logicielle au sein du processeur de traitement du signal.

On suppose toujours à titre d'exemple, que la réponse impulsionnelle C du moyen de propagation physique est un polynome à cinq coefficients complexes de degré 4, défini selon la formule (VI) ci-dessous :

$$C(z) = c_0 + c_1 z^{-1} + c_2 z^{-2} + c_3 z^{-3} + c_4 z^{-4} \qquad\qquad (VI)$$

De même, on suppose à titre d'exemple, que la réponse impulsionnelle G des dispositifs d'émission et de réception est un polynome de degré 3 à quatre coefficients complexes défini par la formule (VII) ci-dessous :

$$G(z) = g_0 + g_1 z^{-1} + g_2 z^{-2} + g_3 z^{-3} \qquad\qquad (VII)$$

Le produit de convolution (produit polynomial) $H(z) = G(z).C(z)$ se traduit alors matriciellement par l'équation H=G.C, dans laquelle :

H est le vecteur colonne formé des coefficients $h_i$, C est le vecteur colonne formé des coefficients $c_i$ et G est la matrice (ici une matrice 8x5) définie par la formule (VIII) ci-dessous :

$$G = \begin{pmatrix} g_0 & 0 & 0 & 0 & 0 \\ g_1 & g_0 & 0 & 0 & 0 \\ g_2 & g_1 & g_0 & 0 & 0 \\ g_3 & g_2 & g_1 & g_0 & 0 \\ 0 & g_3 & g_2 & g_1 & g_0 \\ 0 & 0 & g_3 & g_2 & g_1 \\ 0 & 0 & 0 & g_3 & g_2 \\ 0 & 0 & 0 & 0 & g_3 \end{pmatrix} \qquad \text{(VIII)}$$

Plus généralement, puisque la réponse impulsionnelle H(z) est une combinaison linéaire de G(z) et de ses versions retardées, le nombre de colonnes de la matrice G est égal au nombre de coefficients de la réponse impulsionnelle C(z) et chaque colonne de la matrice G comporte les coefficients $g_i$ complétés par des 0, les coefficients d'une colonne étant décalés d'une ligne par rapport aux coefficients de la colonne précédente.

La réponse impulsionnelle estimée finale corrigée du canal, référencée HF, doit alors s'écrire selon la formule (IX) :

$$HF = GC \qquad \text{(IX)}$$

et doit également être le plus proche possible de la réponse impulsionnelle H. En d'autres termes, HF doit minimiser le critère défini par la formule (X) ci-dessous :

$$\|HF - H\|^2 \qquad \text{(X)}$$

On montre alors que la réponse impulsionnelle finale estimée du canal est définie par la formule (XI) ci-dessous :

$$HF = \underbrace{G\,(G^*G)^{-1}\,G^*}_{M}\,H \qquad \text{(XI)}$$

La matrice M prédéterminée est dans le cas présent une matrice de taille 8x8 dont les coefficients ne tiennent compte que des coefficients $g_i$ et sont indépendants des données transmises. Cette matrice M est mémorisée dans une mémoire MM du bloc BST.

Le bloc BCR effectue donc une correction 41 (figure 4) des coefficients $h_i$ de la réponse impulsionnelle H du canal, de façon à délivrer les coefficients $hf_i$ de la réponse impulsionnelle corrigée HF du canal.

Ce sont ces coefficients hf qui seront utilisés dans le bloc d'égalisation BEQ du téléphone TP (figure 1).

Le bloc d'égalisation va résoudre l'équation définie par la formule matricielle (XII) ci-dessous :

$$R = b.HF + N \qquad \text{(XII)}$$

dans laquelle R désigne le vecteur représentatif de la séquence de bits reçus, b désigne le vecteur représentatif des bits utiles du train d'impulsion à décoder, HF désigne la matrice de convolution dont chaque colonne comporte les coefficients $hf_i$ complétés par des 0, les coefficients d'une colonne étant décalés d'une ligne par rapport aux coefficients de la colonne précédente, et N désigne le vecteur de bruit. La résolution de cette équation (égalisation) est bien connue de l'homme du métier. A cet égard, il existe de nombreux algorithmes d'égalisation.

Parmi ces traitements d'égalisation, on peut considérer deux grandes classes :

**6**

- celles qui font la détection symbole par symbole, comme par exemple l'algorithme connu par l'homme du métier sous le vocable DFE (Décision Feedback Equalisation) et dont les aspects essentiels sont par exemple décrits dans l'ouvrage de John G. Proakis, intitulé "Digital Communications", troisième édition, McGraw-Hill, Inc.,
- et celles qui font de la détection de séquence de symboles, comme par exemple l'algorithme connu sous le vocable MLSE ("Maximum-Likelihood Sequence Estimation"), ou celui connu sous le vocable DFSE ("Decision Feedback Sequence Estimation" en langue anglaise), également bien connu de l'homme du métier. Ces deux algorithmes ont fait l'objet de nombreuses publications. L'homme du métier pourra notamment se référer, en ce qui concerne l'algorithme MLSE, à l'ouvrage de John G. Proakis précité, et en ce qui concerne l'algorithme DFSE, à l'article de Hans C. Guren et Nils Holte, intitulé "Decision Feedback Sequence Estimation for Continuous Phase Modulation on a Linear Multipath Channel", IEEE Transactions on Communications, Vol. 41, N° 2, Février 1993.

Les algorithmes de détection symbole par symbole, ont une complexité très faible par rapport aux algorithmes de détection par séquence, mais donnent des performances inférieures.

C'est la raison pour laquelle il est généralement choisi de préférence des algorithmes d'égalisation utilisant une estimation par séquence.

Les bits b ainsi délivrés sont ensuite décodés dans le bloc de décodage de canal TDC.

Les algorithmes d'égalisation et ceux de décodage de canal sont par exemple également exécutés par le processeur de traitement du signal.

L'invention n'est pas limitée aux modes de réalisation et de mise en oeuvre décrits ci-avant, mais en embrasse toutes les variantes. Ainsi, dans l'exemple décrit, H est une combinaison linéaire de G et de ses versions retardées. Mais bien entendu, il est possible de considérer des retards demi-entiers, voire plus fins, en utilisant un suréchantillonnage du signal.

Par ailleurs, le dispositif d'estimation selon l'invention peut non seulement être incorporé dans un téléphone mobile cellulaire, mais aussi dans la chaîne de réception d'une station de base ou plus généralement dans tout récepteur d'informations numériques.

**Revendications**

1. Procédé d'estimation de la réponse impulsionnelle d'un canal de transmission d'informations comportant un émetteur d'informations, un récepteur d'informations et un moyen de propagation s'étendant entre l'émetteur et le récepteur, **caractérisé par le fait qu'**on effectue une première estimation (40) de la réponse impulsionnelle (H) du canal considéré dans sa globalité, puis on corrige (41) cette première estimation, indépendamment des informations transmises, en tenant compte du fait que la réponse impulsionnelle de l'émetteur et la réponse impulsionnelle du récepteur sont connues, de façon à obtenir une estimation finale corrigée (HF) de la réponse impulsionnelle du canal.

2. Procédé selon la revendication 1, **caractérisé par le fait qu'**on obtient les coefficients (hf) de l'estimation finale de la réponse impulsionnelle du canal en multipliant les coefficients (h) de la première estimation de la réponse impulsionnelle du canal par une matrice (M) dont les coefficients sont prédéterminés, représentatifs des réponses impulsionnelles de l'émetteur et du récepteur, et indépendants des informations transmises sur le canal.

3. Procédé selon l'une des revendications précédentes, **caractérisé par le fait que** la première estimation (H) est une estimation dite aveugle ou une estimation dite entraînée.

4. Dispositif d'estimation de la réponse impulsionnelle d'un canal de transmission d'informations comportant un émetteur d'informations, un récepteur d'informations et un moyen de propagation s'étendant entre l'émetteur et le récepteur, **caractérisé par le fait qu'**il comprend des premiers moyens d'estimation (BST1) aptes à effectuer une première estimation de la réponse impulsionnelle (H) du canal considéré dans sa globalité, et des deuxièmes moyens d'estimation (BCR, MH), connectés aux premiers moyens d'estimation, et aptes à corriger cette première estimation, indépendamment des informations transmises, en tenant compte du fait que la réponse impulsionnelle de l'émetteur et la réponse impulsionnelle du récepteur sont connues, de façon à délivrer une estimation finale corrigée (HF) de la réponse impulsionnelle du canal.

5. Dispositif selon la revendication 4, **caractérisé par le fait que** les deuxièmes moyens d'estimation comportent une mémoire (MM) contenant une matrice dont les coefficients sont prédéterminés, représentatifs des réponses impulsionnelles de l'émetteur et du récepteur, et indépendants des informations transmises sur la canal, et des moyens de traitement (BCR) aptes à multiplier les coefficients de la première estimation de la réponse impulsionnelle du canal par ladite matrice, de façon à obtenir les coefficients de l'estimation finale de la réponse impulsionnelle du canal.

6. Dispositif selon la revendication 4 ou 5, **caractérisé par le fait que** les premier moyens d'estimation (BST1) sont aptes à effectuer une première estimation dite aveugle.

7. Dispositif selon la revendication 4 ou 5, **caractérisé par le fait que** les premier moyens d'estimation (BST1) sont aptes à effectuer une première estimation dite entraînée.

8. Récepteur d'informations numériques, en particulier téléphone mobile cellulaire, **caractérisé par le fait qu'**il incorpore un dispositif tel que défini dans l'une des revendications 4 à 7.

9. Programme d'ordinateur comprenant des moyens de code-programme mettant en oeuvre le procédé tel que défini dans l'une des revendications 1 à 3 lorsque ledit programme est exécuté au sein d'un processeur.

10. Support, capable d'être lu par un processeur , et contenant des moyens de code-programme aptes à mettre en oeuvre le procédé tel que défini dans l'une des revendications 1 à 3 lorsque ledit programme est exécuté au sein du processeur.

**Patentansprüche**

1. Verfahren zum Schätzen der Impulsantwort eines Informationsübertragungskanals mit einem Informationssender, einem Informationsempfänger und einem Ausbreitungsmittel, das sich zwischen dem Sender und dem Empfänger erstreckt, **dadurch gekennzeichnet, dass** eine erste Schätzung (40) der Impulsantwort (H) des in seiner Gesamtheit betrachteten Kanals durchgeführt wird, dass dann diese erste Schätzung unabhängig von den übertragenen Informationen korrigiert wird (41), unter Berücksichtigung der Tatsache, dass die Impulsantwort des Senders und die Impulsantwort des Empfängers bekannt sind, um eine korrigierte Endschätzung (HF) der Impulsantwort des Kanals zu erhalten.

2. Verfahren nach Anspruch 1, **dadurch gekennzeichnet, dass** die Koeffizienten (hf) der Endschätzung der Impulsantwort des Kanals durch Multiplikation der Koeffizienten (h) der ersten Schätzung der Impulsantwort des Kanals mit einer Matrix (M) erhalten werden, deren Koeffizienten vorbestimmt, für die Impulsantworten des Senders und des Empfängers repräsentativ und von den auf dem Kanal übertragenen Informationen unabhängig sind.

3. Verfahren nach einem der vorhergehenden Ansprüche,
**dadurch gekennzeichnet, dass** die erste Schätzung (H) eine so genannte blinde Schätzung oder eine so genannte bedingt Schätzung ist.

4. Vorrichtung zum Schätzen der Impulsantwort eines Informationsübertragungskanals mit einem Informationssender, einem Informationsempfänger und einem Ausbreitungsmittel, das sich zwischen dem Sender und dem Empfänger erstreckt, **dadurch gekennzeichnet, dass** sie erste Schätzmittel (BST1), die in der Lage sind, eine erste Schätzung der Impulsantwort (H) des in seiner Gesamtheit betrachteten Kanals durchzuführen, und zweite Schätzmittel (BCR, MH) aufweist, die mit den ersten Schätzmitteln verbunden und in der Lage sind, diese erste Schätzung unabhängig von den übertragenen Informationen zu korrigieren, unter Berücksichtigung der Tatsache, dass die Impulsantwort des Senders und die Impulsantwort des Empfängers bekannt sind, um eine korrigierte Endschätzung (HF) der Impulsantwort des Kanals zu liefern.

5. Vorrichtung nach Anspruch 4, **dadurch gekennzeichnet, dass** die zweiten Schätzmittel einen Speicher (MM), der eine Matrix enthält, deren Koeffizienten vorbestimmt, für die Impulsantworten des Senders und des Empfängers repräsentativ und von den auf dem Kanal übertragenen Informationen unabhängig sind, und Verarbeitungsmittel (BCR) aufweisen, die in der Lage sind, die Koeffizienten der ersten Schätzung der Impulsantwort des Kanals mit der Matrix zu multiplizieren, um die Koeffizienten der Endschätzung der Impulsantwort des Kanals zu erhalten.

6. Vorrichtung nach Anspruch 4 oder 5, **dadurch gekennzeichnet, dass** die ersten Schätzmittel (BST1) in der Lage sind, eine erste so genannte blinde Schätzung durchzuführen.

7. Vorrichtung nach Anspruch 4 oder 5, **dadurch gekennzeichnet, dass** die ersten Schätzmittel (BST1) in der Lage sind, eine erste so genannte bedingte Schätzung durchzuführen.

8. Empfänger digitaler Informationen, insbesondere ein zellulares Mobiltelefon, **dadurch gekennzeichnet, dass** er eine Vorrichtung enthält, wie sie in einem der Ansprüche 4 bis 7 definiert ist.

9. Computerprogramm, das Programmcode-Mittel aufweist, die das Verfahren anwenden, wie es in einem der Ansprüche 1 bis 3 definiert ist, wenn das Programm innerhalb eines Prozessors ausgeführt wird.

10. Träger, der von einem Prozessor gelesen werden kann und der Programmcode-Einrichtungen enthält, die in der Lage sind, das Verfahren anzuwenden, wie es in einem der Ansprüche 1 bis 3 definiert ist, wenn das Programm innerhalb des Prozessors ausgeführt wird.

## Claims

1. Process for estimating the impulse response of an information transmission channel comprising an information sender, an information receiver and a means of propagation extending between the sender and the receiver, **characterized in that** a first estimate (40) is made of the impulse response (H) of the channel considered as a whole, then this first estimate is corrected (41), independently of the information transmitted, by taking account of the fact that the impulse response of the sender and the impulse response of the receiver are known, so as to obtain a corrected final estimate (HF) of the impulse response of the channel.

2. Process according to Claim 1, **characterized in that** the coefficients (hf) of the final estimate of the impulse response of the channel are obtained by multiplying the coefficients (h) of the first estimate of the impulse response of the channel by a matrix (M) whose coefficients are predetermined and representative of the impulse responses of the sender and of the receiver, and are independent of the information transmitted on the channel.

3. Process according to one of the preceding claims, **characterized in that** the first estimate (H) is a so-called blind estimate or a so-called learnt estimate.

4. Device for estimating the impulse response of an information transmission channel comprising an information sender, an information receiver and a means of propagation extending between the sender and the receiver, **characterized in that** it comprises first estimation means (BST1) able to make a first estimate of the impulse response (H) of the channel considered as a whole, and second estimation means (BCR, MH), connected to the first estimation means, and able to correct this first estimate, independently of the information transmitted, by taking account of the fact that the impulse response of the sender and the impulse response of the receiver are known, so as to deliver a corrected final estimate (HF) of the impulse response of the channel.

5. Device according to Claim 4, **characterized in that** the second estimation means comprise a memory (MM) containing a matrix whose coefficients are predetermined and representative of the impulse responses of the sender and of the receiver, and are independent of the information transmitted on the channel, and processing means (BCR) able to multiply the coefficients of the first estimate of the impulse response of the channel by the said matrix, so as to obtain the coefficients of the final estimate of the impulse response of the channel.

6. Device according to Claim 4 or 5, **characterized in that** the first estimation means (BST1) are able to make a first so-called blind estimate.

7. Device according to Claim 4 or 5, **characterized in that** the first estimation means (BST1) are able to make a first so-called learnt estimate.

8. Digital information receiver, in particular cellular mobile telephone, **characterized in that** it incorporates a device as defined in one of Claims 4 to 7.

9. Computer program comprising program-code means implementing the process as defined in one of Claims 1 to 3 when the said program is executed within a processor.

10. Support, capable of being read by a processor, and containing program-code means able to implement the process as defined in one of Claims 1 to 3 when the said program is executed within the processor.

FIG.1

# FIG.2

De CAN > → BST1 → BCR → Vers BEQ

BST

MM

# FIG.3

RIE    RIP    RIR

→ Ge(z) → C(z) → Gr(z) →

H(z)

RICT

# FIG.4

```
┌─────────────┐
│    1ère     │╲  40
│ estimation  │
└─────────────┘
       │
       ▼
    ╭───────╮
    │   H   │
    ╰───────╯
       │
       ▼
╭──────────────╮      ┌─────────────┐
│ G(G*.G)⁻¹G*  │─────▶│ Correction  │╲  41
╰──────────────╯      │   de H      │
                      └─────────────┘
                            │
                            ▼
                         ╭───────╮
                         │  HF   │
                         ╰───────╯
```